# EUROPÄISCHE PATENTSCHRIFT

(11) **EP 3 248 719 B1**
(45) Veröffentlichungstag und Bekanntmachung des Hinweises auf die Patenterteilung: **01.05.2019**
(21) Anmeldenummer: 17172381.0
(22) Anmeldetag: 23.05.2017
(51) Int. Cl.: B22F 3/105, B22F 5/00, B33Y 80/00, B33Y 10/00, B33Y 30/00

(54) **VERFAHREN UND VORRICHTUNG ZUM ADDITIVEN HERSTELLEN ZUMINDEST EINES BAUTEILBEREICHS EINES BAUTEILS**
METHOD AND APPARATUS FOR ADDITIVE MANUFACTURE OF AT LEAST ONE COMPONENT AREA OF A COMPONENT
PROCÉDÉ ET DISPOSITIF DE FABRICATION ADDITIVE D'AU MOINS UNE PARTIE D'UN COMPOSANT

(30) Priorität: 25.05.2016 DE 102016209084
(43) Veröffentlichungstag der Anmeldung: 29.11.2017
(73) Patentinhaber: MTU Aero Engines AG, 80995 München (DE)
(72) Erfinder: Ladewig, Alexander, 83707 Bad Wiessee (DE); Bamberg, Joachim, 85221 Dachau (DE); Henkel, Benjamin, 80997 München (DE); Bürger, Laura, 85221 Dachau (DE)

(56) Entgegenhaltungen:
- DE-T2- 69 622 581
- FR-A1- 2 998 819
- US-A1- 2014 334 924
- US-A1- 2014 348 692

## Beschreibung

Die Erfindung betrifft ein Verfahren und eine Vorrichtung zum additiven Herstellen zumindest eines Bauteilbereichs eines Bauteils.

Verfahren und Vorrichtungen zur Herstellung von einzelnen Bauteilbereichen oder vollständigen Bauteilen sind in einer großen Vielzahl bekannt. Insbesondere sind additive bzw. generative Fertigungsverfahren (sog. Rapid Manufacturing- bzw. Rapid Prototyping-Verfahren) bekannt, bei denen das Bauteil, bei dem es sich beispielsweise um ein Bauteil einer Strömungsmaschine bzw. eines Flugtriebwerks handeln kann, schichtweise aufgebaut wird. Vorwiegend metallische Bauteile können beispielsweise durch Laser- bzw. Elektronenstrahlschmelzverfahren hergestellt werden. Dabei wird zunächst schichtweise mindestens ein pulverförmiger Bauteilwerkstoff im Bereich einer Aufbau- und Fügezone aufgetragen, um eine Pulverschicht zu bilden. Anschließend wird der Bauteilwerkstoff lokal verfestigt, indem dem Bauteilwerkstoff im Bereich der Aufbau- und Fügezone Energie mittels wenigstens eines Hochenergiestrahls zugeführt wird, wodurch der Bauteilwerkstoff schmilzt und eine Bauteilschicht bildet. Der Hochenergiestrahl wird dabei in Abhängigkeit einer Schichtinformation der jeweils herzustellenden Bauteilschicht gesteuert. Die Schichtinformationen werden üblicherweise aus einem 3D-CAD-Körper des Bauteils erzeugt und in einzelne Bauteilschichten unterteilt. Nach dem Verfestigen des geschmolzenen Bauteilwerkstoffs wird die Bauteilplattform schichtweise um eine vordefinierte Schichtdicke abgesenkt. Danach werden die genannten Schritte bis zur endgültigen Fertigstellung des gewünschten Bauteilbereichs oder des gesamten Bauteils wiederholt. Der Bauteilbereich bzw. das Bauteil kann dabei grundsätzlich auf einer Bauteilplattform oder auf einem bereits erzeugten Teil des Bauteils oder Bauteilbereichs hergestellt werden. Die Vorteile dieser additiven Fertigung liegen insbesondere in der Möglichkeit, sehr komplexe Bauteilgeometrien mit Hohlräumen, Hinterschnitten und dergleichen im Rahmen eines einzelnen Verfahrens herstellen zu können.

In der DE 696 22 581 T2 wird ein Verfahren zur Herstellung eines vollständig dichten dreidimensionalen Metallgegenstandes offenbart. Dabei wird der innere Abschnitt des Gegenstands durch selektives Lasersintern in einem Querschnitt einer Pulverschicht gebildet. Nach der Bildung der Pulverschicht wird der Laser zur Bildung einer gasundurchlässigen Haut um den inneren Abschnitt des Artikels in dieser Schicht herum gerichtet. Der Vorgang wird wiederholt, bis der Artikel fertiggestellt ist. Der von der Haut umgebene Artikel wird dann heiß isostatisch gepresst, um den Artikel zu verdichten.

Aus der FR 2 998 819 A1 ist ein generative Fertigungsverfahren bekannt, bei welchem während der Bildung eines Schmelzbads eine Back-up-Erwärmung verwendet wird, um das Material in einem an das Schmelzbad angrenzenden Bereich auf eine Temperatur unterhalb des Schmelzpunktes des verwendeten Pulvers zu erhitzen, wobei der Bereich einen Bereich stromaufwärts des Bades und eine Region stromabwärts von dem Bad umfasst. Das Material in dem stromaufwärtigen Bereich wird erwärmt, um eine Abkühlrate des Materials unter seine natürliche Abkühlrate zu reduzieren. Das Material im stromabwärtigen Bereich wird erhitzt, um die Erwärmungsgeschwindigkeit des Materials unter seine natürliche Erwärmungsgeschwindigkeit bis zum Schmelzpunkt zu verringern. Das Material in einem Teil eines dem Schmelzbad benachbarten Bereichs wird auf eine Temperatur zwischen einem Drittel und der Hälfte des Schmelzpunktes erhitzt.

Die US 2014/348692 A1 offenbart eine Vorrichtung und ein Verfahren zur Herstellung eines dreidimensionalen Objekts durch sukzessive schichtweise Verfestigung ausgewählter Zonen einer Pulverschicht, wobei die verfestigten Zonen aufeinanderfolgenden Abschnitten des dreidimensionalen Objekts entsprechen. Dabei wird zunächst eine äußere Grenze der Pulverschicht mittels eines Laserstrahls entlang eines voreingestellten Weges, der der Kontur der äußeren Grenze entspricht und der Kontur des Querschnitts des Objekts folgt, verfestigt. Anschließend wird der zentrale innere Teils der Pulverschicht mittels eines von einer zweiten Energiequelle stammenden Elektronenstrahls durch Bewegen des Elektronenstrahls der zweiten Energiequelle relativ zu dem Objekt selektiv aufgeschmolzen.

Die US 2014/334924 A1 offenbart ein Verfahren zur generativen Herstellung eines Bauteils, wobei Material Schicht für Schicht selektiv mit einer darunter angeordneten Schicht oder einem Substrat verbunden wird. Dabei wirkt zusätzlich ein Laser vor, während und/oder nach dem Verbinden auf das Material ein.

Bei dieser Art der additiven Fertigung werden jedoch häufig Pulverpartikel an der Oberfläche angebacken oder angesintert. Dies führt zu sehr rauen Oberflächen, welche wiederum die Festigkeiten der hergestellten Bauteile bzw. Bauteilbereiche negativ beeinflussen können. Durch Optimierungen der Prozessparameter wird versucht, die Oberfläche zu glätten. Dies ist jedoch nicht ausreichend für diverse Anwendungen, insbesondere bei Bauteilen für die Luft- und Raumfahrt. Daher müssen die hergestellten Bauteile bzw. Bauteilbereiche häufig mechanisch oder chemisch nachbearbeitet werden, was mit einem hohen Zeit- und Kostenaufwand verbunden ist. Zusätzlich sind insbesondere innen liegende Oberflächen für konventionelle Glättungsverfahren teilweise schwer oder gar nicht zugänglich.

Aufgabe der vorliegenden Erfindung ist es, ein gattungsgemäßes Verfahren und eine gattungsgemäße Vorrichtung anzugeben, welche die additive Herstellung von Bauteilbereichen oder vollständigen Bauteilen mit verbesserter Oberflächenqualität ermöglicht.

Die Aufgaben werden erfindungsgemäß durch ein Verfahren mit den Merkmalen des Patentanspruchs 1 sowie durch eine Vorrichtung mit den Merkmalen des Patentanspruchs 8 gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen der jeweils anderen Erfindungsaspekte anzusehen sind.

Ein erster Aspekt der Erfindung betrifft ein Verfahren zum additiven Herstellen zumindest eines Bauteilbereichs eines Bauteils, insbesondere eines Bauteils einer Strömungsmaschine, bei welchem zumindest die Schritte a) schichtweises Auftragen mindestens einer Pulverschicht aus einem pulverförmigen Bauteilwerkstoff auf eine Bauteilplattform im Bereich einer Aufbau- und Fügezone, b) lokales Verfestigen der Pulverschicht durch selektives Belichten mittels wenigstens eines Hochenergiestrahls im Bereich der Aufbau- und Fügezone unter Ausbildung einer Bauteilschicht, c) Absenken der Bauteilplattform um eine vordefinierte Schichtdicke und d) Wiederholen der Schritte a) bis c) bis zur Fertigstellung des Bauteilbereichs oder des Bauteils durchgeführt werden. Es ist vorgesehen, dass zumindest ein Konturabschnitt wenigstens einer Bauteilschicht in einem Schritt b1) wenigstens einmal mittels wenigstens eines Hochenergiestrahls derart belichtet wird, dass die verfestigte Pulverschicht lokal erwärmt, aber nicht aufgeschmolzen wird, und in einem zeitlich nachfolgenden Schritt b2) mittels wenigstens eines Hochenergiestrahls derart belichtet wird, dass die verfestigte Pulverschicht im Bereich des Konturabschnitts lokal aufgeschmolzen wird. Eine verbesserte Oberflächenqualität wird dabei erfindungsgemäß dadurch erreicht, dass Schritt b1) mindestens zweimal durchgeführt wird, bevor Schritt b2) durchgeführt wird, wobei eine Bewegungsrichtung des wenigstens einen Hochenergiestrahls entlang des Konturabschnitts nach mindestens einer Ausführung von Schritt b1) umgekehrt wird. Mit anderen Worten ist es erfindungsgemäß vorgesehen, dass während des Aufbauprozesses wenigstens einer Bauteilschicht nach der Volumenbelichtung in Schritt b) zumindest ein Teil der Konturlinie der Bauteilschicht in Schritt b1) mindestens einmal gesondert belichtet wird, derart, dass es zunächst nicht wieder zum Aufschmelzen des bereits verfestigten Bauteilwerkstoffs kommt. Der Energieeintrag durch den wenigstens einen Hochenergiestrahl wird also so gesteuert, dass die resultierende Temperatur der Bauteilschicht im Bereich der Konturlinie möglichst dicht an der Schmelztemperatur des betreffenden Bauteilwerkstoffs, also beispielsweise maximal 20 K, 10 K, 5 K, 2 K oder weniger unterhalb der Schmelztemperatur liegt, es aber zu keinem erneuten Aufschmelzen kommt. Diese schlagartige Erwärmung der Konturlinie führt zu einem Druckstoß, welcher unmittelbar an der Oberfläche anliegende Pulverpartikel wegdrückt. In einem zweiten Schritt b2) wird dieser Konturabschnitt beispielsweise mit konventionellen Parametern, das heißt beispielsweise mit Parametern, die bereits so oder ähnlich bei der Volumenbelichtung in Schritt b) verwendet wurden, umgeschmolzen, das heißt über die Schmelztemperatur erwärmt. Dabei liegen nun keine Pulverpartikel mehr an das Schmelzbad an, wodurch ein Anhaften oder Einschließend dieser Pulverpartikel zuverlässig verhindert und eine entsprechend hohe Oberflächenqualität sichergestellt werden. Die beide Schritte b1) und b2) können dabei grundsätzlich lediglich für einen bezüglich der Oberflächenqualität besonders relevanten Konturabschnitt, für mehrere örtlich beabstandete und/oder aneinander angrenzende Konturabschnitte oder entlang der gesamten Konturlinie der Bauteilschicht durchgeführt werden. Auf diese Weise werden glatte Oberflächen schon während des additiven Herstellungsverfahrens erzielt, so dass auf zusätzliche Nachbearbeitung vorteilhaft verzichtet werden kann. Zudem sind auch innere bzw. geschlossene Oberflächen unmittelbar zugänglich. Weitere Vorteile bestehen darin, dass jede Kontamination durch chemische Hilfsmittel oder sonstige Fremdmaterialien ausgeschlossen werden kann und kein Risiko hinsichtlich unerwünschten Materialabtrags (Maßhaltigkeit) besteht. Zudem ist die Festigkeit des resultierenden Bauteils vorteilhaft erhöht. Dabei ist es immer vorgesehen, dass Schritt b1) mindestens zweimal durchgeführt wird, bevor Schritt b2) durchgeführt wird. Mit anderen Worten wird der jeweilige Konturabschnitt oder die gesamte Kontur der Bauteilschicht zweimal oder mehr mit dem wenigstens einen Hochenergiestrahl abgefahren, um den Bauteilwerkstoff in diesem Bereich lokal stark zu erwärmen, ohne ihn jedoch aufzuschmelzen. Hierdurch werden an der Oberfläche anliegende Pulverpartikel besonders zuverlässig von der Oberfläche weggedrückt, wodurch im nachfolgenden Schritt b2) eine besonders hohe Oberflächenqualität erzeugt werden kann. Zusätzlich wird eine Bewegungsrichtung des wenigstens einen Hochenergiestrahls entlang des Konturabschnitts nach mindestens einer Ausführung von Schritt b1) umgekehrt. Mit anderen Worten ist es vorgesehen, dass der wenigstens eine Hochenergiestrahl bei der ersten Durchführung von Schritt b1) in eine erste Richtung entlang des jeweiligen Konturabschnitts oder entlang der gesamten Kontur der Bauteilschicht bewegt wird und bei einer erneuten Durchführung von Schritt b1) in einer der ersten Richtung entgegen gesetzten Richtung entlang des jeweiligen Konturabschnitts oder entlang der gesamten Kontur der Bauteilschicht bewegt wird. Hierdurch kann besonders zuverlässig sichergestellt werden, dass die Oberfläche zumindest bis zum erneuten Aufschmelzen in Schritt b2) frei von Pulverpartikeln bleibt.

Weitere Vorteile ergeben sich, indem eine Bewegungsrichtung des wenigstens einen Hochenergiestrahls entlang des Konturabschnitts nach jeder Ausführung von Schritt b1) umgekehrt wird. Hierdurch kann besonders zuverlässig sichergestellt werden, dass die Oberfläche zumindest bis zum erneuten Aufschmelzen in Schritt b2) frei von Pulverpartikeln bleibt.

Weitere Vorteile ergeben sich dadurch, dass der wenigstens eine Hochenergiestrahl in Schritt b1) und Schritt b2) mit einer um maximal ±10 % abweichenden bzw. um bis zum 90 % reduzierten Leistung betrieben wird. In anderen Worten kann die Leistung des wenigstens einen Hochenergiestrahls während Schritt b1) und Schritt b2) zumindest im Wesentlichen konstant gehalten werden. Dies vereinfacht die Steuerung bzw. Regelung des wenigstens einen Hochenergiestrahls und seines Energieeintrags in den Konturbereich der Bauteilschicht, da der Konturbereich bzw. die Kontur nach Schritt b1) bereits erwärmt ist, so dass in Schritt b2) mit dem gleichen Energieeintrag ein Aufschmelzen erzielt werden kann. Alternativ oder zusätzlich kann vorgesehen sein, dass der wenigstens eine Hochenergiestrahl in Schritt b1) und Schritt b2) mit unterschiedlichen Geschwindigkeiten entlang des Konturabschnitts bewegt wird. Dies stellt eine weitere einfache Möglichkeit dar, um den gewünschten Energieeintrag in den Schritten b1) und b2) zu realisieren. Vorzugsweise wird der wenigstens eine Hochenergiestrahl in Schritt b2) mit einer Geschwindigkeit bewegt, die geringer ist als die Geschwindigkeit in Schritt b1). Beispielsweise kann der wenigstens eine Hochenergiestrahl in Schritt b1) mit einer Geschwindigkeit von 10 m/s bewegt werden, während er in Schritt b2) nur mit einer Geschwindigkeit von 5 m/s, 2 m/s, 1 m/s oder weniger bewegt wird.

Weitere Vorteile ergeben sich, indem zumindest die Schritte b1) und b2) in einer Schutzgasatmosphäre durchgeführt werden. Als Schutzgasatmosphäre kann grundsätzlich jedes geeignete und unter den Prozessparametern nicht mit dem Bauteilwerkstoff reagierende Gas oder Gasgemisch, beispielsweise Argon und/oder Stickstoff verwendet werden. Mit Hilfe einer solchen Schutzgasatmosphäre kann neben einem Schutz der Bauteilschicht vor Oxidation auch eine besonders hohe Oberflächenqualität erzielt werden, da sich das Schutzgas durch das lokale Erwärmen in Schritt b1) lokal schlagartig ausdehnt und damit zu einem Druckstoß führt, der an der Oberfläche anliegendes Pulver besonders zuverlässig von der Oberfläche wegdrückt.

In einer weiteren vorteilhaften Ausgestaltung der Erfindung ist vorgesehen, dass die Schritte b1) und b2) für mindestens zwei unterschiedliche Konturabschnitte und vorzugsweise für alle Konturabschnitte einer einzelnen Bauteilschicht und/oder für mindestens zwei Bauteilschichten und vorzugsweise für jede Bauteilschicht durchgeführt werden. Hierdurch ist es möglich, entweder nur besonders relevante Oberflächenbereiche des Bauteils oder die gesamte Oberfläche des Bauteils qualitativ zu verbessern, wodurch das Verfahren besonders wirtschaftlich durchgeführt werden kann.

Weitere Vorteile ergeben sich, wenn die Schritte b1) und b2) mittels wenigstens eines aufgeteilten Hochenergiestrahls und/oder mittels mehrerer Hochenergiestrahlen gleichzeitig an unterschiedlichen Konturabschnitten durchgeführt werden. Dies erlaubt eine gleichzeitige Oberflächenbearbeitung von zwei oder mehr Konturabschnitten, wodurch die Bearbeitungs- und Herstellungszeit der Bauteilschicht und damit des Bauteilbereichs bzw. Bauteils vorteilhaft gesenkt werden können.

Weitere Vorteile ergeben sich, wenn als Hochenergiestrahl ein Elektronenstrahl und/oder ein Laserstrahl verwendet wird. Hierdurch können Bauteilbereiche oder Bauteile hergestellt werden, deren mechanischen Eigenschaften zumindest im Wesentlichen denen des Bauteilwerkstoffs entsprechen. Zur Erzeugung des Laserstrahls können beispielsweise CO₂-Laser, Nd:YAG-Laser, Yb-Faserlaser, Diodenlaser oder dergleichen vorgesehen sein. Ebenso kann vorgesehen sein, dass zwei oder mehr Elektronen- bzw. Laserstrahlen verwendet werden, um die Bearbeitungszeit zu reduzieren und/oder um besonders großflächige Bauteilschichten herstellen zu können.

Ein zweiter Aspekt der Erfindung betrifft eine Vorrichtung zur additiven Herstellung zumindest eines Bauteilbereichs eines Bauteils, insbesondere eines Bauteils einer Strömungsmaschine, wobei die Vorrichtung mindestens einen Beschichter zum Auftrag von mindestens einer Pulverschicht aus einem pulverförmigen Bauteilwerkstoff auf eine Aufbau- und Fügezone einer absenkbaren Bauteilplattform und mindestens eine Strahlungsquelle zum Erzeugen wenigstens eines Hochenergiestrahls, mittels welchem die Pulverschicht im Bereich der Aufbau- und Fügezone lokal zu einer Bauteilschicht verfestigbar ist, umfasst. Eine verbesserte Oberflächenqualität des additiv hergestellten Bauteilbereichs oder Bauteils wird erfindungsgemäß dadurch ermöglicht, dass die Vorrichtung eine Steuereinrichtung umfasst, welche dazu ausgebildet ist, die Strahlungsquelle derart anzusteuern, dass zumindest ein Konturabschnitt wenigstens einer Bauteilschicht in einem Schritt mindestens zweimal mittels wenigstens eines Hochenergiestrahls derart belichtet wird, dass die verfestigte Pulverschicht lokal erwärmt, aber nicht aufgeschmolzen wird, wobei die Steuereinrichtung dazu ausgebildet ist, eine Bewegungsrichtung des wenigstens einen Hochenergiestrahls entlang des Konturabschnitts nach mindestens einer Ausführung von Schritt b1) umzukehren, und wobei die Steuereinrichtung dazu ausgebildet ist, die verfestigte Pulverschicht in einem zeitlich nachfolgenden Schritt mittels wenigstens eines Hochenergiestrahls derart zu belichten, dass die verfestigte Pulverschicht im Bereich des Konturabschnitts lokal aufgeschmolzen wird. Unter dem Ausdruck "ausgebildet zu" wird dabei im Rahmen der vorliegenden Erfindung nicht nur eine Steuereinrichtung verstanden, die die grundlegende Eigenschaft zur Durchführung der genannten Schritte besitzt, sondern die konkret dazu ausgelegt und eingerichtet ist, die genannten Schritte auch tatsächlich auszuführen. Durch diese zusätzlichen Schritte während des Aufbauprozesses lässt sich die Oberflächenrauheit der betreffenden Bauteilschicht(en) erheblich reduzieren, da zunächst an der Oberfläche anliegende Pulverpartikel weggedrückt und die Kontur der Bauteilschicht anschließend teilweise oder vollständig umgeschmolzen werden kann, ohne dass Partikel an das Schmelzbad anliegen. Die Vorrichtung kann grundsätzlich eine steuer- und/oder regelbare Strahlungsquelle oder mehrere steuer- und/oder regelbare Strahlungsquellen umfassen, um die jeweils erforderlichen Hochenergiestrahlen zu erzeugen. Besondere Vorteile ergeben sich, wenn die Vorrichtung dazu ausgebildet ist, ein Verfahren gemäß dem ersten Erfindungsaspekt durchzuführen. Die sich hieraus ergebenden Merkmale und deren Vorteile gehen aus der Beschreibung des ersten Erfindungsaspekts hervor, wobei vorteilhafte Ausgestaltungen des ersten Erfindungsaspekts als vorteilhafte Ausgestaltungen des zweiten Erfindungsaspekts und umgekehrt anzusehen sind.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigt:
- Fig. 1: eine schematische Aufsicht einer additiv hergestellten Bauteilschicht zusammen mit einer Vergrößerung eines Konturabschnitts während der Belichtung mit einem Hochenergiestrahl;
- Fig. 2: eine schematische Aufsicht einer erfindungsgemäß hergestellten Bauteilschicht;
- Fig. 3: eine schematische Vergrößerung eines in Fig. 2 gezeigten Konturabschnitts während einer ersten Durchführung eines Verfahrensschritts b1);
- Fig. 4: eine schematische Vergrößerung des in Fig. 2 gezeigten Konturabschnitts während einer zweiten Durchführung des Verfahrensschritts b1); und
- Fig. 5: eine schematische Vergrößerung des in Fig. 2 gezeigten Konturabschnitts während eines Verfahrensschritts b2).

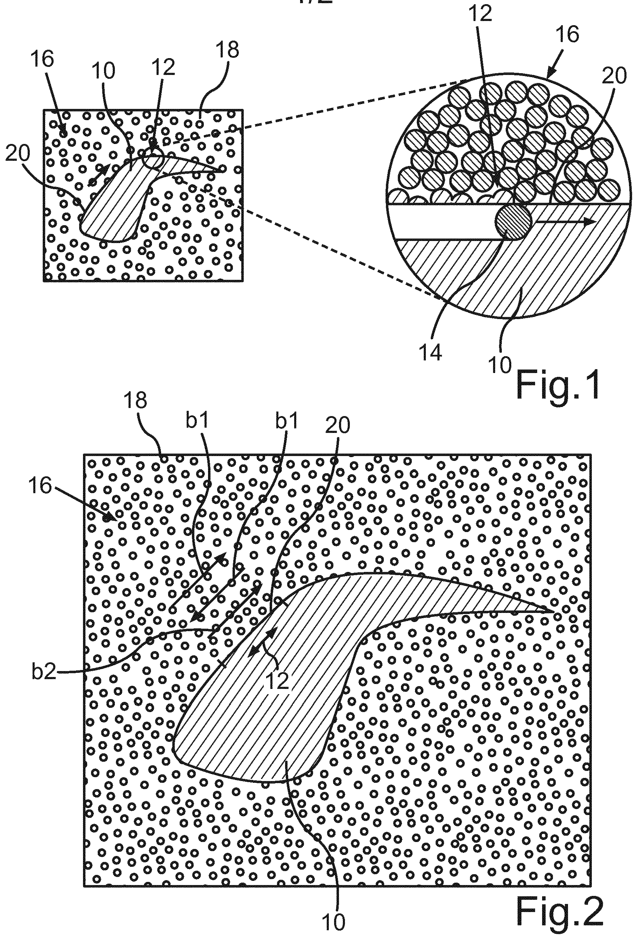

Fig. 1 zeigt eine schematische Aufsicht einer additiv hergestellten Bauteilschicht 10 eines Turbinenbauteils für eine thermische Gasturbine zusammen mit einer Vergrößerung eines Konturabschnitts 12 während der Belichtung mit einem Hochenergiestrahl 14. Zum Herstellen der Bauteilschicht 10 wird zunächst in an sich bekannter Weise eine Pulverschicht 16 aus einem pulverförmigen Bauteilwerkstoff auf eine Bauteilplattform (nicht gezeigt) im Bereich einer Aufbau- und Fügezone 18 schichtweise aufgetragen. Anschließend wird die Pulverschicht 16 lokal verfestigt, indem sie mittels wenigstens eines Hochenergiestrahls 14, beispielsweise eines Laserstrahls im Bereich der Aufbau- und Fügezone 18 unter Ausbildung der Bauteilschicht 10 selektiv belichtet wird. Anschließend wird die Bauteilplattform um eine vordefinierte Schichtdicke abgesenkt, wonach die genannten Schritte bis zur Fertigstellung eines Bauteilbereichs oder eines vollständigen Bauteils wiederholt werden. Man erkennt in der Vergrößerung, dass beim Belichten der Pulverschicht 16 gemäß der eingezeichneten Pfeile entlang der Konturlinie 20 Partikel 16 an der Oberfläche der Bauteilschicht 10 haften und mit eingeschmolzen werden bzw. an der Oberfläche anhaften. Dies führt zu sehr rauen Oberflächen, welche wiederum die Festigkeit der Bauteilschicht 10 negativ beeinflussen und aufwändig nachbearbeitet werden müssen, was insbesondere bei innen liegenden Oberflächenbereichen teilweise nicht möglich ist.

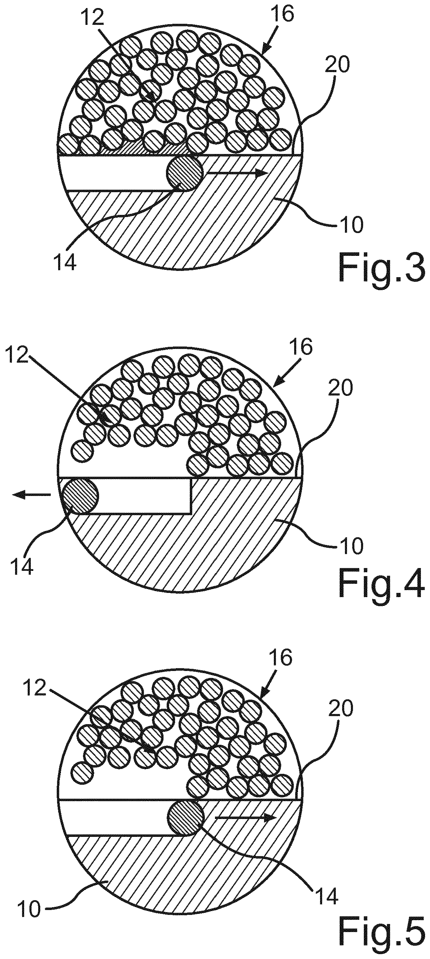

Fig. 2 zeigt eine schematische Aufsicht einer erfindungsgemäß hergestellten Bauteilschicht 10. Fig. 2 wird im Folgenden in Zusammenschau mit Fig. 3 bis Fig. 5 erläutert werden, welche jeweils schematische Vergrößerungen des in Fig. 2 gezeigten Konturabschnitts 12 während der in Fig. 2 mit den Pfeilen b1 und b2 gekennzeichneten Verfahrensschritte zeigen. Der Konturabschnitt 12, welcher eine hohe Oberflächenqualität aufweisen muss, wird hierbei in einem ersten Schritt b1 mittels wenigstens eines Hochenergiestrahls 14 derart belichtet, dass die verfestigte Pulverschicht 16 lokal erwärmt, aber gerade noch nicht wieder aufgeschmolzen wird. Hierzu wird der Hochenergiestrahl 14 gemäß dem ersten Pfeil b1 schnell und mit geringer Streckenenergie entlang der Konturlinie 20 im Konturabschnitt 12 bewegt. Hierbei kommt es aufgrund der schlagartigen lokalen Erwärmung an der Oberfläche der Bauteilschicht 10 zu einem Druckaufbau eines grundsätzlich optionalen Schutzgases (z. B. Argon), mit welchem ein Bauraum einer zum Durchführen des Verfahrens verwendeten Vorrichtung (nicht gezeigt) gefüllt ist. Dieser Zustand ist in Fig. 3 gezeigt. Anschließend wird die Konturlinie 20 in entgegen gesetzter Richtung in einem zweiten Schritt b1 erneut mit dem Hochenergiestrahl 14 belichtet, ohne dass es zu einem Aufschmelzen der Bauteilschicht 10 kommt. Dies ist in Fig. 4 gezeigt. Man erkennt, dass die unmittelbar anliegenden Pulverpartikel 16 aufgrund des resultierenden Druckstoßes durch das Schutzgas von der Oberfläche bzw. der Konturlinie 20 weggedrückt werden. In einem nachfolgenden Schritt b2, in welchem die Richtung des Hochenergiestrahls erneut umgekehrt wird, so dass die Belichtung in der gleichen Richtung wie beim ersten Schritt b1 erfolgt, wird dann die Konturlinie 20 mit dem Hochenergiestrahl 14 derart belichtet, dass die verfestigte Pulverschicht im Bereich des Konturabschnitts 12 lokal mit konventionellen Parametern aufgeschmolzen wird. Dies ist in Fig. 5 dargestellt. Dabei liegen nun keine Partikel 16 mehr an das Schmelzbad an, wodurch ein Anbacken zuverlässig verhindert und eine hohe Oberflächenqualität sichergestellt wird. Danach können die beschriebenen Schritte sukzessive entlang weiterer Konturabschnitte 12 oder entlang der gesamten Konturlinie 20 durchgeführt werden. Bei den Schritten b1 (2x) und b2 wird der Hochenergiestrahl 14 mit konstanter Leistung, beispielsweise mit 300 W betrieben, jedoch mit unterschiedlichen Geschwindigkeiten bewegt. Bei den beiden Schritten b1 wird der Hochenergiestrahl 14 jeweils mit etwa 10 m/s bewegt, während er bei Schritt b2 langsamer, beispielsweise mit 1 m/s bewegt wird. Hierdurch werden der Energieeintrag und damit das Erwärmen bzw. Aufschmelzen gesteuert. Alternativ oder zusätzlich können mehrere Hochenergiestrahlen 14 verwendet werden, um die Schritte b1 und b2 auszuführen. Ebenso kann vorgesehen sein, dass mehrere Hochenergiestrahlen 14 verwendet werden, um mehrere Konturabschnitte 12 gleichzeitig zu bearbeiten. Die genannten Schritte b1 und b2 können zudem bedarfsweise bei mehreren Bauteilschichten 10 oder bei jeder Bauteilschicht 10 durchgeführt werden. Auf diese Weise werden glatte Oberflächen schon während des additiven Herstellungsverfahrens erzielt, so dass auf zusätzliche Nachbearbeitung vorteilhaft verzichtet werden kann. Zudem sind auch innere bzw. geschlossene Oberflächen unmittelbar zugänglich. Weitere Vorteile bestehen darin, dass jede Kontamination durch chemische Hilfsmittel oder sonstige Fremdmaterialien ausgeschlossen werden kann und kein Risiko hinsichtlich unerwünschten Materialabtrags (Maßhaltigkeit) besteht. Zudem ist die Festigkeit des resultierenden Bauteils vorteilhaft erhöht.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, DIN-Toleranzen und dergleichen - als vom Rahmen der Erfindung mitumfasst anzusehen.

### Bezugszeichenliste:

- 10: Bauteilschicht
- 12: Konturabschnitt
- 14: Hochenergiestrahl
- 16: Pulverschicht
- 18: Fügezone
- 20: Konturlinie

## Patentansprüche

1. Verfahren zum additiven Herstellen zumindest eines Bauteilbereichs eines Bauteils, insbesondere eines Bauteils einer Strömungsmaschine, folgende Schritte umfassend:
a) schichtweises Auftragen mindestens einer Pulverschicht (16) aus einem pulverförmigen Bauteilwerkstoff auf eine Bauteilplattform im Bereich einer Aufbau- und Fügezone (18);
b) lokales Verfestigen der Pulverschicht (16) durch selektives Belichten mittels wenigstens eines Hochenergiestrahls (14) im Bereich der Aufbau- und Fügezone (18) unter Ausbildung einer Bauteilschicht (10);
c) Absenken der Bauteilplattform um eine vordefinierte Schichtdicke; und
d) Wiederholen der Schritte a) bis c) bis zur Fertigstellung des Bauteilbereichs oder des Bauteils,
wobei zumindest ein Konturabschnitt (12) wenigstens einer Bauteilschicht (10) in einem Schritt b1) wenigstens einmal mittels wenigstens eines Hochenergiestrahls (14) derart belichtet wird, dass die verfestigte Pulverschicht (16) lokal erwärmt, aber nicht aufgeschmolzen wird, und in einem zeitlich nachfolgenden Schritt b2) mittels wenigstens eines Hochenergiestrahls (14) derart belichtet wird, dass die verfestigte Pulverschicht (16) im Bereich des Konturabschnitts (12) lokal aufgeschmolzen wird,
**dadurch gekennzeichnet, dass**
Schritt b1) mindestens zweimal durchgeführt wird, bevor Schritt b2) durchgeführt wird, wobei eine Bewegungsrichtung des wenigstens einen Hochenergiestrahls (14) entlang des Konturabschnitts (12) nach mindestens einer Ausführung von Schritt b1) umgekehrt wird.

2. Verfahren nach Anspruch 1,
**dadurch gekennzeichnet, dass**
eine Bewegungsrichtung des wenigstens einen Hochenergiestrahls (14) entlang des Konturabschnitts (12) nach jeder Ausführung von Schritt b1) umgekehrt wird.

3. Verfahren nach Anspruch 1 oder 2,
**dadurch gekennzeichnet, dass**
der wenigstens eine Hochenergiestrahl (14) in Schritt b1) und Schritt b2) mit einer um bis zu 90 % reduzierten Leistung betrieben wird und/oder dass der wenigstens eine Hochenergiestrahl (14) in Schritt b1) und Schritt b2) mit unterschiedlichen Geschwindigkeiten entlang des Konturabschnitts (12) bewegt wird.

4. Verfahren nach einem der Ansprüche 1 bis 3,
**dadurch gekennzeichnet, dass**
zumindest die Schritte b1) und b2) in einer Schutzgasatmosphäre durchgeführt werden.

5. Verfahren nach einem der Ansprüche 1 bis 4,
**dadurch gekennzeichnet, dass**
die Schritte b1) und b2) für mindestens zwei unterschiedliche Konturabschnitte (12) und vorzugsweise für alle Konturabschnitte (12) einer einzelnen Bauteilschicht (10) und/oder für mindestens zwei Bauteilschichten (10) und vorzugsweise für jede Bauteilschicht (10) durchgeführt werden.

6. Verfahren nach einem der Ansprüche 1 bis 5,
**dadurch gekennzeichnet, dass**
die Schritte b1) und b2) mittels wenigstens eines aufgeteilten Hochenergiestrahls (14) und/oder mittels mehrerer Hochenergiestrahlen (14) gleichzeitig an unterschiedlichen Konturabschnitten (12) durchgeführt werden.

7. Verfahren nach einem der Ansprüche 1 bis 6,
**dadurch gekennzeichnet, dass**
als Hochenergiestrahl (14) ein Elektronenstrahl und/oder ein Laserstrahl verwendet wird.

8. Vorrichtung zur additiven Herstellung zumindest eines Bauteilbereichs eines Bauteils, insbesondere eines Bauteils einer Strömungsmaschine, umfassend:
- mindestens einen Beschichter zum Auftrag von mindestens einer Pulverschicht (16) aus einem pulverförmigen Bauteilwerkstoff auf eine Aufbau- und Fügezone (18) einer absenkbaren Bauteilplattform; und
- mindestens eine Strahlungsquelle zum Erzeugen wenigstens eines Hochenergiestrahls (14), mittels welchem die Pulverschicht (16) im Bereich der Aufbau- und Fügezone (18) lokal zu einer Bauteilschicht (10) verfestigbar ist,
**dadurch gekennzeichnet, dass**
diese eine Steuereinrichtung umfasst, welche dazu ausgebildet ist, die Strahlungsquelle derart anzusteuern, dass zumindest ein Konturabschnitt (12) wenigstens einer Bauteilschicht (10) in einem Schritt b1) mindestens zweimal mittels wenigstens eines Hochenergiestrahls (14) derart belichtet wird, dass die verfestigte Pulverschicht (16) lokal erwärmt, aber nicht aufgeschmolzen wird, wobei die Steuereinrichtung dazu ausgebildet ist, eine Bewegungsrichtung des wenigstens einen Hochenergiestrahls (14) entlang des Konturabschnitts (12) nach mindestens einer Ausführung von Schritt b1) umzukehren, und wobei die Steuereinrichtung dazu ausgebildet ist, die verfestigte Pulverschicht (16) in einem zeitlich nachfolgenden Schritt b2) mittels wenigstens eines Hochenergiestrahls (14) derart zu belichten, dass die verfestigte Pulverschicht (16) im Bereich des Konturabschnitts (12) lokal aufgeschmolzen wird.

## Claims

1. A method for additive manufacture of at least one component area of a component, in particular a component of a turbomachine, comprising following steps:
a) applying at least one powder layer (16) of a powdery component material onto a component platform in the area of a construction and attachment zone (18) in a layer-by-layer manner;
b) locally solidifying the powder layer (16) by selective illumination by means of at least one high-energy beam (14) in the area of the construction and attachment zone (18) while forming a component layer (10);
c) lowering the component platform by a predefined layer thickness; and
d) repeating steps a) to c) until the component area or the component is completed,
wherein at least one contour portion (12) of at least one component layer (10) is illuminated at least once, in step b1), by means of at least one high-energy beam (14), in such a way that the solidified powder layer (16) is locally heated without fusing, and in a temporally successive step b2) illumination is performed by at least one high-energy beam (14) in such a way that the solidified powder layer (16) is locally fused in the area of the contour portion (12),
**characterized in that**
step b1) is performed at least twice, prior to performing step b2), wherein a direction of motion of the at least one high-energy beam (14) along the contour portion (12) is inverted at least after one performance of step b1).

2. The method of claim 1,
**characterized in that**
the direction of motion of the at least one high-energy beam (14) along the contour portion (12) is inverted after each performance of step b1).

3. The method of claim 1 or 2,
**characterized in that**
the at least one high-energy beam (14) is operated in step b1) and step b2) with a power which is reduced by up to 90%, and/or that the at least one high-energy beam (14) is moved in step b1) and step b2) with different speeds along the contour portion (12).

4. The method of any of claims 1 to 3,
**characterized in that**
at least steps b1) and b2) are performed inside a protective gas atmosphere.

5. The method of any of claims 1 to 4,
**characterized in that**
steps b1) and b2) are performed for at least two different contour portions (12) and preferably for all contour portions (12) of a single component layer (10) and/or for at least two component layers (10) and preferably for each component layer (10).

6. The method of any of claims 1 to 5,
**characterized in that**
steps b1) and b2) are performed simultaneously at different contour portions (12) by means of at least one split high-energy beam (14) and/or by means of a plurality of high-energy beams (14).

7. The method of any of claims 1 to 6,
**characterized in that**
the high-energy beam (14) used is an electron beam and/or a laser beam.

8. A device for additive manufacture of at least one component area of a component, in particular of a component of a turbomachine, comprising:
- at least one coater for applying at least one powder layer (16) of powdery component material onto a construction and attachment zone (18) of a lowerable component platform; and
- at least one radiation source for generating at least one high-energy beam (14), by means of which the powder layer (16) may locally solidify in the area of the construction and attachment zone (18) to a component layer (10),
**characterized in that**
the device comprises a control device, which is configured for controlling the radiation source in such a way that at least one contour portion (12) of at least one component layer (10) is illuminated at least twice by at least one high-energy beam (14) in a step b1), in such a way that the solidified powder layer (16) is locally heated without fusing, wherein the control device is configured for inverting a motion direction of the at least one high-energy beam (14) along the contour portion (12) after at least one performance of step b1), and wherein the control device is configured for illuminating the solidified powder layer (16) in a temporally successive step b2) by means of at least one high-energy beam (14) in such a way that the solidified powder layer (16) is locally fused in the area of the contour portion (12).

## Revendications

1. Procédé de fabrication additive d'au moins une partie d'un composant, en particulier d'un composant de turbomachine, comprenant les étapes suivantes :
a) l'application par couches d'au moins une couche de poudre (16) d'un matériau de composant pulvérulent sur une plate-forme de composant dans la région d'une zone de construction et de jonction (18) ;
b) la solidification locale de la couche de poudre (16) par exposition sélective au moyen d'au moins un faisceau à haute énergie (14) dans la région de la zone de construction et de jonction (18) avec formation d'une couche de composant (10) ;
c) l'abaissement de la plate-forme de composant à raison d'une épaisseur de couche prédéfinie ; et
d) la répétition des étapes a) à c) jusqu'à l'achèvement de la partie de composant ou du composant,
au moins une section de contour (12) d'au moins une couche de composant (10) étant exposée au moins une fois dans une étape b1) au moyen d'au moins un faisceau à haute énergie (14), de sorte que la couche de poudre (16) solidifiée est chauffée localement mais non fondue, et étant exposée dans une étape suivante b2) au moyen d'au moins un faisceau à haute énergie (14) de sorte que la couche de poudre (16) solidifiée est fondue localement dans la région de la section de contour (12),
**caractérisé en ce que**
l'étape b1) est réalisée au moins deux fois avant la réalisation de l'étape b2), un sens de déplacement de l'au moins un faisceau à haute énergie (14) le long de la section de contour (12) étant inversé après au moins une exécution de l'étape b1).

2. Procédé selon la revendication 1, **caractérisé en ce qu'**un sens de déplacement de l'au moins un faisceau à haute énergie (14) est inversé le long de la section de contour (12) après chaque exécution de l'étape b1).

3. Procédé selon la revendication 1 ou 2, **caractérisé en ce que** l'au moins un faisceau à haute énergie (14) dans l'étape b1) et l'étape b2) fonctionne à une puissance réduite jusqu'à 90 % environ et/ou **en ce que** l'au moins un faisceau à haute énergie (14) dans l'étape b1) et l'étape b2) est déplacé à différentes vitesses le long de la section de contour (12).

4. Procédé selon l'une des revendications 1 à 3, **caractérisé en ce qu'**au moins les étapes b1) et b2) sont réalisées dans une atmosphère de gaz protecteur.

5. Procédé selon l'une des revendications 1 à 4, **caractérisé en ce que** les étapes b1) et b2) sont réalisées pour au moins deux sections de contour (12) différentes et de préférence pour toutes les sections de contour (12) d'une seule couche de composant (10) et/ou pour au moins deux couches de composant (10) et de préférence pour chaque couche de composant (10).

6. Procédé selon l'une des revendications 1 à 5, **caractérisé en ce que** les étapes b1) et b2) sont réalisées simultanément sur différentes sections de contour (12) au moyen d'au moins un faisceau à haute énergie (14) divisé et/ou au moyen de plusieurs faisceaux à haute énergie (14).

7. Procédé selon l'une des revendications 1 à 6, **caractérisé en ce qu'**un faisceau d'électrons et/ou un faisceau laser est utilisé comme faisceau à haute énergie (14).

8. Dispositif de fabrication additive d'au moins une partie d'un composant, en particulier d'un composant de turbomachine, comprenant :
- au moins un dispositif de dépôt pour appliquer au moins une couche de poudre (16) d'un matériau de composant pulvérulent sur une zone de construction et de jonction (18) d'une plate-forme de composant abaissable ; et
- au moins une source de rayonnement pour générer au moins un faisceau à haute énergie (14) au moyen duquel la couche de poudre (16) peut être solidifiée localement pour former une couche de composant (10) dans la région de la zone de construction et de jonction (18),
**caractérisé en ce qu'**il comprend un dispositif de commande conçu pour commander la source de rayonnement de sorte qu'au moins une section de contour (12) d'au moins une couche de composant (10) est exposée au moins deux fois dans une étape b1) au moyen d'au moins un faisceau à haute énergie (14), **en ce que** la couche de poudre (16) solidifiée est chauffée localement mais n'est pas fondue, le dispositif de commande étant conçu pour inverser un sens de déplacement de l'au moins un faisceau à haute énergie (14) le long de la section de contour (12) après au moins une exécution de l'étape b1), et le dispositif de commande étant conçu pour exposer la couche de poudre (16) solidifiée au cours d'une étape ultérieure b2) au moyen d'au moins un faisceau à haute énergie (14), de sorte que la couche de poudre (16) solidifiée est fondue localement dans la région de la section de contour (12).
